# EUROPEAN PATENT SPECIFICATION

(11) **EP 2 874 851 B1**
(45) Date of publication and mention of the grant of the patent: **03.02.2016**
(21) Application number: 13756327.6
(22) Date of filing: 23.07.2013
(51) Int. Cl.: B60Q 9/00, B60R 21/34, F16P 3/14, G08G 1/16

(54) **ARRANGEMENT AND METHOD FOR OPERATING A SYSTEM, A CORRESPONDING COMPUTER PROGRAM AND A CORRESPONDING COMPUTER-READABLE STORAGE MEDIUM**
ANORDNUNG UND VERFAHREN FÜR DEN BETRIEB EINES SYSTEMS, ENTSPRECHENDES COMPUTERPROGRAMM UND ENTSPRECHENDES COMPUTERLESBARES SPEICHERMEDIUM
AGENCEMENT ET PROCÉDÉ D'EXPLOITATION D'UN SYSTÈME, PROGRAMME INFORMATIQUE CORRESPONDANT ET SUPPORT DE STOCKAGE LISIBLE PAR ORDINATEUR CORRESPONDANT

(30) Priority: 25.07.2012 DE 102012106747
(43) Date of publication of application: 27.05.2015
(73) Proprietor: Autonomos GmbH, 12161 Berlin (DE)
(72) Inventor: SCHNÜRMACHER, Michael, 10715 Berlin (DE)
(74) Representative: Gulde & Partner
(86) International application number: PCT/EP2013/065540
(87) International publication number: WO 2014/016307

(56) References cited:
- DE-A1- 3 918 998
- US-A1- 2008 167 781
- US-A1- 2011 279 261

## Description

The present invention concerns an arrangement and a method for operating a system, a corresponding computer program and a corresponding computer-readable storage medium which are usable especially for safeguarding an environment of the system, such as for example a garbage collection truck. A special purpose of the present invention is safeguarding the environment of a vehicle, where the invention comprises a man-machine interface which enables a controlled handover of responsibility for action.

### Background of the Invention

A driver of a garbage collection truck may only reverse if it is assured that persons are not endangered. If this can not be guaranteed the driver has to be assisted by a signaller. For ensuring this behaviour the following guidelines have been established:
- continuous assistance by the signaller;
- visual contact via wing mirror must not be disturbed;
- no person may stay within the dangerous area;
- safety distance to solid obstacles must be at least 0,5 m;
- no person may stay on the footboards or on vehicle superstructures.

In the field of the invention driver assistance systems (DAS) are known. However, in many cases the work flow of the system is interrupted by false alarm. Deciding whether an alarm signal or an automatic interruption of the work flow is based on a correct assessment of the situation or whether a false alarm is triggered is a time consuming operation according to the prior art solution. Conventional driver assistance systems do not provide 100% safety in complex situations. Other systems reduce working efficiency due to excessive error warnings.

A prior art solution proposes use of ultrasonic sensors for monitoring the area behind a vehicle (see for example the publication of Groeneveld Transport Efficiency Nederland B.V., Stephensonweg 12, 4207 HB Gorinchem: Safety while Reversing. Greensight with Camera Detects and Informs).

A garbage collection truck with rear area monitoring using cameras is described in the utility model DE 20 2007 011 784 U1.

A man-machine-interface for controlling a target position for an automatic parking process is disclosed in the publication DE 10 2006 026 092 A1.

From the application US 2008/0167781 A1 a method and apparatus is known for detecting and avoiding an obstacle using a system of a vehicle. The method includes the steps of detecting a distance between the obstacle and the vehicle, generating an action when the distance is less than a threshold, determining whether an override of the system has been initiated, and disabling the action if it is determined that the override has been initiated. A shortcoming of this method is that after overriding the system other obstacles can not be detected.

An event warning system is disclosed in application US 2011/0279261 A1. According to this system, real time, personalized and meaningful alert warnings are provided to either or both a machine operator/driver and pedestrians who are in harm's way, or are potentially approaching harm's way. An alarm can be cleared by overriding the alert system.

Publication DE 39 18 998 A1 discloses a vehicle with rear area monitoring. If the rear area monitoring system has lost its function, an engine stop can be released manually.

It is therefore an object of the invention to provide an arrangement and a method for operating a system as well as a corresponding computer program and a corresponding computer-readable storage medium, which obviate the disadvantages of prior art solutions and, more particularly, enable an operator to quickly recognize and deactivate a false alarm.

### Summary

This objective is solved with the invention by the features of the claims 1, 10, 14 and 15. Advantageous embodiments of the invention are recited in the dependent claims.

A particular advantage of the present invention consists in that a high level of safety is guaranteed while at the same time erroneous interruption of the work flow is minimized. For this purpose a method is proposed for operating a system which can take different states at different times. Such systems may be industrial plants, machines or vehicles including peripheral devices, which are operated by an operator. According to the invention, the system comprises at least one sensor, which captures parts of an environment of the system. As sensors optical and/or acoustical sensors may be used, for example infrared sensors, ultrasonic sensors, magneto-resistive sensors, cameras, or thermal sensors or such. According to a preferred embodiment, sensors of different kind are combined for monitoring the environment. According to another preferred embodiment, at least two cameras are combined to form stereo camera system.

The inventive method further comprises the step of evaluating the data, which are captured by the sensors, for detecting predefined events. Examples for predefined events may be for example objects or persons in a predefined area, exceeding or going below a predefined distance between parts of the system and objects in the environment of the system, exceeding or going below a predefined speed of the system or parts of the system, application of switches like touch-sensitive sensors so as for example contact switches of a footboard, or other safety-related events. According to a preferred embodiment, evaluating comprises determining whether a detected event occurs during the system is in a particular state. For example, if a person in a predefined distance to the system is detected, it may be determined whether the system or parts of the system such as for example slewing or tilting elements, extension arms or closure elements are moving.

The evaluation preferably is performed by at least one data processing unit. The at least one data processing unit can be mounted at least partially on the system. In another preferred embodiment, the at least one data processing unit is distributed into parts, which are mounted on the system, and parts, which are arranged remote from the system.

Depending on a result of the evaluation, a predefined state of the system is established automatically, thereby changing the state of the system desired by the operator into another different state. For example, when an event has been detected while the system performs a process or action, the process or action may be interrupted or stopped, or at least annoying effects may be initiated so as for example acoustic signals or blinking light signals. In the case of a reversing vehicle, the brakes may be applied automatically if a person in the proximity of the rear section of the vehicle is detected. Or in the case of a garbage collection truck, which empties a waste container, the work flow of the lifter is stopped, if a person below the lifter or the waste container is detected.

According to a further aspect of the inventive method, data are reproduced, which describe at least a part of the environment monitored by the sensor(s), especially the detected event. The part of the environment may be reproduced visually and/or acoustically. According to a preferred embodiment, a touch-sensitive monitor is used as a means for visual reproduction. Advantageously, the means for visual reproduction is arranged within the field of view and within the reach of the hands of an operator of the system. For example, the means for visual reproduction is mounted in a cabin, where the operator operates the system.

According to a further preferred embodiment, at least one of the events, the object and the persons, which have caused the change of the state of the system, is reproduced emphasized on the means for visual reproduction or by means for acoustic reproduction. Emphasizing may comprise highlighting the events, the object or the persons by colour or by a (coloured) frame. A particular advantage of such emphasizing is that the operator's attention is drawn to the situation, which has caused the change of the state of the system. The operator therefore can quickly evaluate whether a dangerous situation has been detected or whether the situation is safe.

According to the invention, means for deactivating the automatically established state of the system are provided. After the operator has evaluated a situation as safe, the operator can via user input into the means for deactivating deactivate the established state and/or return into the former state of the system, which was desired by the operator. In the case, where a touch-sensitive monitor is used and emphasized objects or persons are displayed, the operator can deactivate the automatically established state by touching with his finger the object or person displayed on the monitor, which has been erroneously detected as obstacle. A touched object or person is deselected. After all displayed objects and persons, which the system has evaluated as critical, dangerous or endangered objects/persons, have been deselected, the automatically established state is deactivated and the operator can operate the system normally. According to a preferred embodiment, the system will return automatically into the former state after deactivation.

According to a preferred embodiment, instead of touching the emphasized objects on the touch-sensitive monitor for deselecting an object, other kind of user input for deselection may be used. For example, objects, which are displayed on a monitor, preferably a non-touch-sensitive monitor, are designated by a sign, a number, a character or a combination thereof. According to a preferred embodiment, the means for deactivating comprises buttons with the corresponding signs, a numbers and/or characters, or a microphone. The buttons and/or the microphone can be part of the monitor or arranged separately from the monitor. For communication between the buttons and/or the microphone and one of the at least one data processing unit a wire-connected, a wireless or a combination thereof may be provided. For deselect one or more objects, a user has to push the button(s), which correspond(s) to the sign, number and/or character, which designates the object(s) to be deselected. By use of the microphone, the user has to pronounce the corresponding sign, number and/or character. According to another preferred embodiment, a touch-sensitive monitor is used and the signs, a numbers and/or characters are displayed at special areas on the touch-sensitive monitor, for example near the frame of the monitor. For deselecting an object, which is designated by a sign, a number and/or a character, the user has to touch the special area with the corresponding sign, number and/or character.

According to a preferred embodiment, data describing an object or a person, which has been evaluated by the system as critical, dangerous or endangered, is stored in storage means of the system. Preferably, the stored data comprises a label, which marks the object as 'critical/dangerous/endangered' or as 'deselected'. Preferably, at least a part of the objects, whose data is stored, is tracked by the system, preferably independent whether the object is labelled as 'critical/dangerous/endangered' or as 'deselected'.

According to a further preferred embodiment, the system continues monitoring the environment of the system after one or more objects have been deselected and the established state has been deactivated. Especially, after a user has deselected the objects, which the system has evaluated as critical or endangered objects, monitoring is continued and a new object, which enters the monitored zone, will be detected and evaluated. If evaluation of the new object indicates that one or more predefined criteria are matched, the predefined state of the system is established. Preferably, after deselection of an event, an object or a person the system continues performing at least the steps of:
- capturing parts of the environment of the system using the at least one sensor,
- evaluating of the data captured by the at least one sensor,
- depending on a result of the evaluation, establishing automatically a predefined state of the system.

According to a preferred embodiment, also the step of reproducing of data which describes the captured parts of the environment is performed after deselection of an event, an object or a person.

According to a further preferred embodiment, evaluating comprises determining of three-dimensional coordinates of at least a part of the environment. For this purpose, algorithms can be used which evaluate data captured by the stereo camera system. In the result, a depth map is provided which assigns at least a part of the elements of the displayed image (preferably each element of the displayed image) a three-dimensional coordinate value. In another embodiment sonar and/or range sensors may be used for determining the three-dimensional coordinate values.

According to another preferred embodiment, data captured by two or more cameras or by two or more camera systems are combined to one single image which is displayed on the monitor. Especially, data of cameras/camera systems, which capture data of different parts of the environment, are combined to display an expanded area as a single image. Combination of the data can comprise a least one of stitching and rectification algorithms. If data of two or more (stereo) camera systems are combined, an expanded stereo image can be provided.

A system according to the invention comprises at least one sensor, at least one data processing unit for evaluating of the data captured by the at least one sensor and for establishing automatically a predefined state of the system, and at least one means for reproducing the captured data and for deactivating the established state. The system is further configured such that a method for operating a system is executable, where the system can take different temporally changeable states. The method comprises the following steps:
- capturing parts of an environment of the system using at least one sensor,
- evaluating of the data captured by the at least one sensor,
- depending on a result of the evaluation, establishing automatically a predefined state of the system,
- reproducing of data which describes the captured parts of the environment,
- providing means for deactivating the established state by user input, where deactivating comprises a confirmation that the user has noticed the reproduction.

The at least one sensor, at least one data processing unit for evaluating of the data captured by the at least one sensor and for establishing automatically a predefined state of the system, and at least one means for reproducing the captured data and for deactivating the established state are at least temporally coupled via at least one communication link.

According to a preferred embodiment, the system comprises industrial plants, machines or vehicles including peripheral devices. The means for reproducing the captured data and for deactivating the established state are preferably arranged within a cabin, where the operator operates the system. Preferably, the means for reproducing the captured data and for deactivating the established state is arranged within the field of view and within the reach of the hands of an operator of the system. According to another aspect of the invention, the means for deactivating comprise at least one of a touch-sensitive monitor, a button and a microphone.

According to the invention, at least a part of the sensors is realized as optical sensors, for example as cameras or a laser scanner system. According to another aspect of the invention, at least two optical sensors form a stereo visualisation system.

According to a preferred embodiment, the at least one data processing unit is connected communicatively with a vehicle control system. It has been found advantageously that the at least one data processing unit comprises at least one Field Programmable Gate Array (FPGA), at least one Application-Specific Integrated Circuit (ASIC), at least one Digital Signal Processor (DSP) or at least one Embedded Computer Unit (ECU). Using FPGA, ASIC, DSP and/or ECU, pre-processing, especially multi-stage pre-processing, of the data captured by the sensors can be preformed.

A computer program according to the invention enables a data processing system, once it has been loaded to storage means of the data processing system, to execute in co-operation with at least one sensor and at least one means for reproducing of data captured by the at least one sensor and for deactivating a state a method for operating a system, where the system can take different temporally changeable states. The method comprises the following steps:
- capturing parts of an environment of the system using at least one sensor,
- evaluating of the data captured by the at least one sensor,
- depending on a result of the evaluation, establishing automatically a predefined state of the system,
- reproducing of data which describes the captured parts of the environment,
- providing means for deactivating the established state by user input, where deactivating comprises a confirmation that the user has noticed the reproduction.

According to a preferred embodiment of the invention, the computer program according to the invention has a modular structure, wherein individual modules are installed on different data processing systems.

Advantageous embodiments contemplate additional computer programs, with which additional method steps or process flows described in the description can be performed.

Such computer programs may be provided, for example, for downloading (for a fee or free of charge, freely accessible or password-protected) in a data or communication network. The provided computer programs can be used with a method whereby a computer program of claim 14 is downloaded from an electronic data network such as, for example, the Internet, to a data processing system connected to the data network.

For performing the inventive method, a computer-readable storage means is used, on which a program is stored that enables a data processing system, once the program has been loaded into memory means of the data processing system, to execute in co-operation with at least one sensor and at least one means for reproducing of data captured by the at least one sensor and for deactivating a state a method for operating a system, where the system can take different temporally changeable states. The method comprises the following steps:
- capturing parts of an environment of the system using at least one sensor,
- evaluating of the data captured by the at least one sensor,
- depending on a result of the evaluation, establishing automatically a predefined state of the system,
- reproducing of data which describes the captured parts of the environment,
- providing means for deactivating the established state by user input, where deactivating comprises a confirmation that the user has noticed the reproduction.

The present invention solves the problem to ensure that persons are not endangered. Additional to the detection of objects or persons in the dangerous zone, the system can be used for monitoring that the rules of the guideline concerning a positioning of the signaller are observed.

The present invention concerns especially a system for safeguarding the direct and near environment of a vehicle, especially of medium-sized to large special or utility vehicles (driver assistance system). According to a special aspect of the invention, the inventive system comprises a man-machine interface which enables a controlled handover of responsibility for action. The safety system of an exemplary embodiment of the invention is characterized in that it comprises sensors fixed to the vehicle for detecting information about the environment of the vehicle. Further, the safety system of an exemplary embodiment comprises an electronic data processing unit which is configured for detecting a dangerous situation by evaluating signals delivered from the sensors and for identifying a state of the vehicle. A further component of the exemplary safety system is a unit which in case of a dangerous situation automatically performs an action for controlling the vehicle (actuator unit). This action must be such that it in a dangerous situation restricts or prevents a function of the vehicle which is normally wished or performed by the driver. The action should lead to avoidance or to reduction of the detected danger. It is the driver's interest to eliminate such a restriction or prevention for re-establishing the normal operating sequence. The exemplary safety system further comprises a presentation unit which is arranged within the field of view and within the reach of the hands of the driver. The driver is enabled to recognize intuitively and promptly the dangerous situation (i.e. the source of the functional restriction) and to estimate its importance. Further, the exemplary safety system comprises an input unit for annulling the activated functional restriction. Annulment is only possible after the driver has considered and examined the dangerous situation with the help of the presentation unit. These measures prevent an unintentional or careless annulling of the activated functional restriction. It is ensured that the functional restriction is annulled knowingly by the driver. The present invention ensures that the driver's attention is drawn automatically to the source of danger, and it is further ensured that the driver realizes the consequences of an annulment of the functional restriction.

Conventional driver assistance systems do not provide 100% safety in complex situations. Other systems reduce working efficiency due to excessive warnings. The present invention overcomes these disadvantages since it allows a quick resumption of the interrupted workflow due to a quick evaluation of the dangerous situation and a quick interaction with the system. A particular feature of the present invention consists in that the responsibility for action is entrusted to the driver only after it is ensured that he is aware of the dangerous situation and of the consequences of his acting.

Further advantages of the present invention shall be described in short with four examples:

### Scenario 1:

In the case, when a vehicle is manoeuvred with the help of a signaller, it happens that the signaller enter a monitored zone and triggers interruption of reversing. Since the signaller is a person, which is aware of the situation, interruption is triggered without a cause. In this case, the driver can deactivate the interruption. After deactivation, the system ignores the signaller, as long as he is within the detection range of the sensors of the system. The signaller can then stay within the monitored zone without triggering a warning or interruption. A system without the inventive deactivation function would have to be turned off, what would, however, result in further hazards.

The problems, which have to be solved, consist in that the system for maintaining the deselection must recognize the signaller in every new image. The system distinguishes the deselected signaller (or in general: a deselected object or person) from other objects or persons detected within the monitored area; the other objects or persons are not ignored by the system. For safety's sake, if a deselected object is merged with a non-deselected object, in a preferred embodiment, the merged object is considered as detected object, which causes interruption of the work flow.

### Scenario 2:

If an object is categorized by the system as dangerous, the vehicle can not continue driving. Is, however, the object, for example small branches, harmless, the work flow is interrupted without a cause. In such a case, the situation has to be solved as quick as possible. Deselecting the harmless objects by user input is the appropriate solution: The driver notices the marked, erroneously detected object on the display and can deselect it for continuing the work. The invention ensures that the driver/operator recognizes the marked object and can evaluate and assess the situation before an object is deselected. After deselection, the deselected object is tracked and distinguished from other objects by the system (as described in the first scenario).

In addition to monitoring the environment in the proximity of the rear part of a vehicle, the invention can be used in further situations (safety-related as well as security-related). The invention can be used for any differentiation between critical and non-critical objects or events, where human estimation is included.

### Scenario 3 (safety):

A further example for use of the invention is monitoring industrial robots, for example during a sorting or an assembling procedure. According to conventional solutions for example, entering of objects of a predefined size in a predefined safety zone will lead to an automatic stop of the procedure. It can happen that new construction elements, dropped parts, packets or such are detected as foreign objects within the safety zone and cause a warning or an interruption of the entire procedure. With the help of the present invention, a skilled worker can deselect an object for subsequent work steps via input into a monitor, if he has recognized that the object is not critical. While the deselected object do not disturb further processing, the system continues monitoring the safety zone and will detect other objects, as for example a careless worker, which enters the safety zone.

### Scenario 4 (security):

An example could be a monitored sculpture in a museum. An acoustic warning is output if a person enters a predefined security zone around the sculpture. A security guard may stand closer to the sculpture, i.e. within the security zone. With the help of the invention, a monitoring person can define the security guard as non-critical by deselecting the corresponding object on the monitor. Since the security system tracks objects, the security guard can move within the security zone without causing acoustic warnings.

Similar, with the help of the present invention, entire rooms or building can be protected against unauthorized intrusion while the security guards may patrol within the rooms without causing alarm.

### Brief description of the Drawings

Exemplary embodiments of the invention will now be described in more detail with reference to the appended figures, which show in:

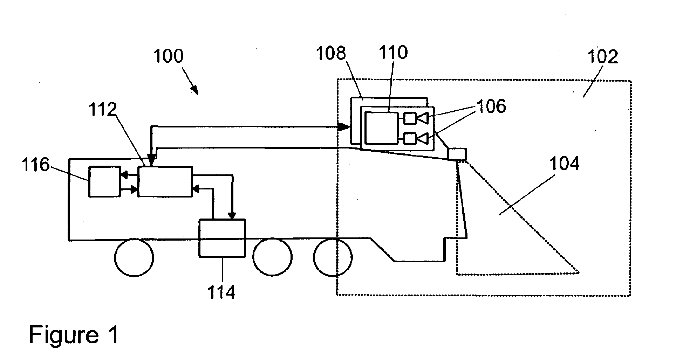

- FIG. 1: a structure of an exemplary embodiment of a system to be operated,
- FIG. 2a: an exemplary flow chart for interrupting a work flow due to a detected dangerous situation,
- FIG. 2b: an exemplary flow chart for deactivating an erroneous interruption,
- FIG. 3a-d: an illustration of exemplary monitoring zones for monitoring the environment in the proximity of the rear part of a vehicle for different activities,
- FIG. 4: an illustration of two exemplary arrangements of camera systems for monitoring the environment in the proximity of the rear part of a vehicle,
- FIG. 5: a schematic illustration of the operation mode of an object-related deselection,
- FIG. 6: an illustration of an exemplary structure of a data processing system for two-stage pre-processing, and
- FIG. 7: an illustration of an exemplary structure of a data processing system, where a one-stage pre-processing is performed near the sensors.

### Detailed Description

A first exemplary embodiment of the invention concerns a system for safeguarding the area 102 behind and at the side of the rearward part of a garbage collection truck 100. According to this embodiment the area 104 behind the truck 100 is monitored within a distance of approximately 5 m. The system is used advantageously at a speed of the truck 100 until approximately 15 km/h. According to this embodiment, cameras 106 are used as sensors. A plurality (at least two) of cameras 106 is combined to form a binocular stereo system 108 (stereovision). The stereo system 108 is arranged at the rear of the truck 100 and configured in such a way that the cameras 106 capture images of the above mentioned area 102 behind and at the side of the rearward part of a garbage collection truck 100. According to a preferred embodiment of the invention the stereo system 108 is configured for providing redundant image data of the area in the direct proximity (until approximately 3 m) of the rear part of the truck 100. The stereo system 108 is calibrated in such a way that within an image of the area in the direct proximity for each image element (pixel) or at least a part of the pixels the spatial coordinate of the origin of the pixel can be determined (depth map, disparity map). With the help of theses data for each captured object the spatial position can be determined. According to a special embodiment of the invention, the depth map is calculated by a Field Programmable Gate Array 110 (FPGA).

The first exemplary embodiment comprises a data processing unit, for example an embedded computer unit 112 (ECU), which determines dangerous situations within the area 102 behind and at the side of the rearward part of a garbage collection truck 100 by evaluating at least the image data and depth information. For this purpose well known object detection algorithms and/or classification algorithms may be used for person or object recognition or for distinguishing by ground detection whether an area is suitable for traffic or not. Advantageously, determination of the dangerous situation comprises evaluation of the state of the truck 100, where information about the state comprises information about gear position, speed or such. If a dangerous situation is recognized by the system, the system executes a pre-defined action. For example: if the driver is reversing, and the system recognizes a person in the rear region of the truck 100, then the system will block reversing by using an actuator unit 114 (reversing lock). Such actuator units are arranged as parameterizable special module (PSM) most of the garbage collection trucks.

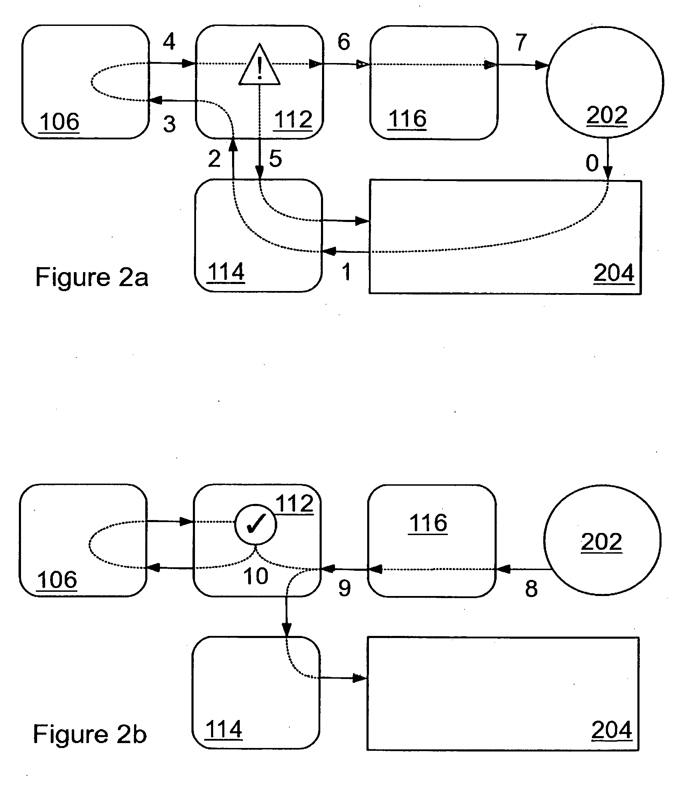

A flow of the method is explained in more detail with the help of figures 2a and 2b. It is important for the driver to annul this blocking for continuing with the work.

### Phase 1:

Steps of a first phase of the method are depicted in figure 2a. The driver 202 wants to reverse, but for example a signaller is staying behind the truck 100. In this case, the system will recognize a dangerous situation, will apply the brakes and display an image of the area 102 behind the truck 100, where within the image the person is highlighted. In detail, the flow is as follows: The driver 202 engages the rear gear in step 0. The vehicle control system, which is realized for example as PSM 114, is informed in step 1 about the change of gear. In step 2, the PSM 114 sends the information about the change of gear to processing unit, which is realized for example as an ECU 112. In step 3, the ECU 112 activates one or more sensors, for example cameras 106. According to another preferred embodiment, the sensors are active during the ignition of the vehicle is switched on. Preferably, at least two cameras 106 are combined to form a stereo system 108. Dependent from the form or layout of the truck one or more such stereo systems 108 may be mounted on the truck 100. The images captured by the cameras 106 or the stereo systems 108 are transmitted to a presentation unit such as a monitor for informing the driver 202. Preferably the monitor is realized as touch display 116. While the truck 100 reverses, the cameras 106 send image data to the ECU 112 in step 4. By evaluating the sensor (image) data the ECU 112 will detect the dangerous situation and in turn send in step 5an emergency stop signal to the PSM 114 which causes the system to apply the brakes. Further, preferably at the same time, the ECU 112 modifies in step 6 the image displayed on the touch display 116 for indicating the dangerous situation. According to a preferred embodiment, an object like the detected person behind the truck 100 is marked by colour or a frame or highlighted in other form. Due to the emergency brake the driver 202 will look at the display 116 and evaluate the situation in step 7. Thus, in step 7 the driver 202 is entrusted with responsibility for acting.

### Phase 2:

Steps of a second phase of the method are depicted in figure 2b. At the end of the first phase, the driver's 202 attention was drawn to the dangerous situation. Rather than waiting that the situation will resolve by itself, the driver 202 can actively annul the blocking of the work flow. For this purpose it is necessary that the driver 202 comprehend the significance of the dangerous situation, which is depicted on the display 116. Since the depicted person is the signaller, the driver knows that the signaller is aware of the situation and that the signaller will act appropriately. In the case that the driver 202 considers the situation as harmless, he can knowingly annul the blocking by deselecting the marked object via touching the object on the touch display 116. After deselection of all marked objects the normal state of the truck 100 is re-established, and the driver 202 can continue reversing. The mode of operation of deselection will be explained later.

Phase 2 is explained in more detail with the help of figure 2b. In step 8, the driver 202 evaluates the situation and deselects the marked objects on the touch display 116, if the situation is considered harmless. The touch display 116 transmits in step 9 the deselection signal to the ECU 112. The ECU 112 processes in step 10 the deselection signal and deactivates the emergency brake after all of the marked objects, which the system has evaluated as critical or endangered objects, are deselected. After deactivating the emergency brake the normal state of the truck 100 is re-established.

According to this embodiment, the touch display 116 provides both, a data output and a data input unit. In other embodiments a data output and a data input unit may be realized as different separate units. The touch display 116 is installed in the drivers cab well within the field of view and within the reach of the hands of the driver.

The images displayed on the touch display 116 are designed that a quick and intuitive identification of the whole displayed scene is possible. In a preferred embodiment the whole area 102 behind and at the side of the rearward part of a garbage collection truck 100 is displayed. According to a preferred embodiment, the image data of the individual cameras 106 are combined and matched, where matching comprises for example at least one of stitching and rectification. As a result of such a combination, a single complete picture of the supervised area is displayed. According to a preferred embodiment of the invention only a part of the whole supervised area is displayed on the display 116. The driver 202 can switch between different parts of the whole scene, for example between rear and side area.

Within the displayed image detected objects, which forms sources of danger, are marked, for example by a frame or a special colour. This facilitates the identification of the sources of danger. With the help of the touch display 116 the driver 202 can deactivate a blocking if the blocking is the result of a wrong detection, for example if the driver 202 uses a signaller for reversing which stays in the supervised area behind the truck 110. The invention allows the driver 202 to deactivate the blocking by touching with a finger the object, which is marked as endangered, on the touch display 116. The blocking is annulled and the work can be restarted with only a short retardation. It is important that no dangerous situation is ignored by the driver 202 when deselecting. This is achieved by a distinct visualisation of the dangerous objects on the display, which ensures that the driver 202 has understood the situation when deselecting an object. Conventional safety systems for vehicles, which detect automatically dangerous situations based on sensors, produce many miss-detections which results in a retardation of the work flow, since these safety systems often represents the situation ambiguously and/or do not enable a quick and controlled resolution of the situation. The present invention solves this problem by providing means for direct interaction by the driver 202 with the safety system.

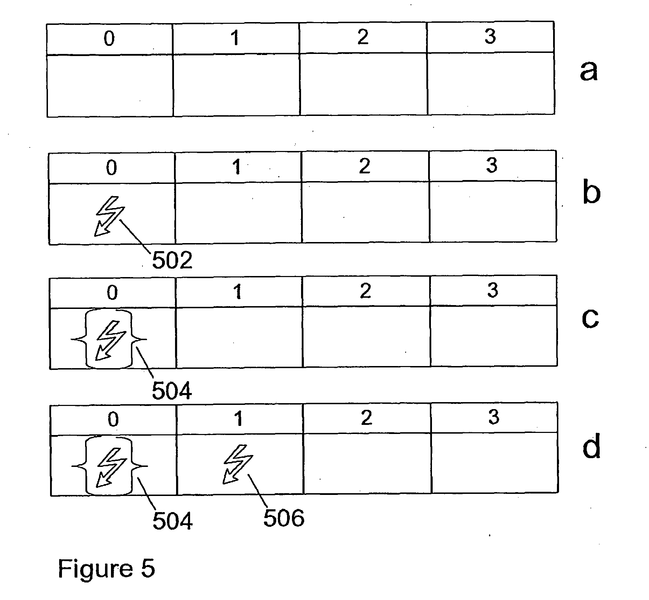

Now, turning to figure 5, which illustrates schematically how deselection works. According to the inventive object-related deselection, deselecting one or more objects, which are marked as critical, do not deactivate the entire safety system, but only ignores the deselected objects. If new objects enter the zone of danger, the safety system will recognize them and signal a dangerous situation including, if necessary, establishing automatically a predefined state of the vehicle.

As depicted in figure 5, according to a preferred embodiment, object container 0, 1, 2 and 3 are implemented for potential recognized objects, for example objects within the supervised zone 312 behind the truck 100. A time 'a' no object is recognized and therefore no object is assigned to the containers. If an object enters the zone, at time 'b', the object is assigned to container 1 and labelled as critical and endangered 502. The safety system activates the predefined (blocking) state. The driver has to deactivate this state if he wants to continue with his work. Thus, if the driver recognizes the object as non-endangered, for example since it is a signaller, the driver can deselect the object, which is then labelled at time 'c' as deselected 504. As a result, the truck 100 will be set in the unblocked state. The driver can continue normally the work. It is important to note that the safety system always is active. If a new object enters the supervised zone 312 behind the truck 100, the safety system will recognize the new object, assigns it to the next object container 1 labelled as endangered 506 and will establish again the blocking state of the truck 100.

This inventive principle enables a controlled handover of responsibility for action between safety system and driver, since the driver for each single object can decide whether the object is endangered or not. In other words, according to the invention not the entire supervised zone is deactivated, but only individual objects are deselected while supervision of the zone is continued. Deactivating the entire system or the supervised zone, what would lead to limited safety.

Important for a correct operation of the safety system is an unambiguous identification of objects within a plurality of frames. The present invention is especially suitable for this purpose, since it enables a precise differentiation between objects.

While in the first embodiment the invention is described using the example of a reversing lock, the invention is usable in many other cases. In the following problems in a working day of a waste collecting team are described, which can be solved or at least reduced by the present invention.

### Footboard Supervision:

A garbage collection truck 100 may not reverse and may not drive with a speed over 30 km/h. The present invention ensures that this behaviour is not based on a personnel estimation of the driver but is based on real data of the PSM 114 and rules implemented on the ECU 112.

Conventional approaches solved the problem with the help of contact switches which are attached to the footboards. In daily life workers avoid this solution, thereby increasing the risk of accidents. The present invention improves the reliability of the contact switch solution and prevents manipulations on the system.

### Lifter Supervision:

For emptying waste containers a lifter at the rear of the truck 100 is used. The waste container is lifted and tilted for emptying. This creates a large zone of danger (working zone or swing range). It is an especially dangerous situation since the dimension of the working zone is in general underestimated. A special dangerous situation arises when the waste container is in unloading position. In this position there is an accessible zone below the waste container which increases the risk of accidents. The risk of accidents is further increased when semi- or fully automatic systems are used.

The purpose of DIN norm EN 1501-5:2011-11 is ensuring that during emptying no person can walk into the dangerous area. "The automatic and semi-automatic operation must automatically interrupt, if it is noticed that a person stays on the footboard." Further, there are special conditions for safety devices. "The access to safety devices must be blocked in such a way that all movements within the operating sphere are stopped immediately."

Until now, there is no practical solution which can be integrated in the work flow in a convenient manner. However, when using the present invention persons staying in the dangerous zone during emptying are recognized. The inventive system in this case prevents the lowering of the waste container and informs the driver via display about the situation.

### Reversing Lock:

Due to distributed attention (wing mirror, monitor, signaller, road traffic, work sequence), pressure of time, poor visibility or distraction of the driver it is possible that the driver does not look into the region behind the truck. By regulation, reversing is only allowed with aid of a signaller. In practice, however, this regulation sometimes is ignored. Such a non-monitored reversing is dangerous for pedestrians and workers. Even at low speed collision (especially with persons) has serious consequences due to high weight and power of the truck.

Modern garbage collection trucks commonly are fitted with a camera which is directed to the area behind the truck. However, viewing range and/or resolution of the cameras are insufficient in a number of situations. The actual aim of the camera is monitoring the emptying process. Such conventional systems can be improved by the invention. The inventive sensors (cameras) capture a larger area behind the truck, and the inventive system monitors actively this area. Persons staying within the dangerous area behind the truck are determined. The same holds true for other obstacles behind the truck. If a person or obstacle is detected by the inventive system, the reversing lock is activated until it is deactivated by the driver after he has examined the situation.

### Manoeuvring in Reverse:

Routes shall be planned in general that reversing is preferably prevented. In practice, in urban traffic manoeuvring in reverse with garbage collection trucks can not be prevented in all circumstances. Due to size and mobility of the garbage collection trucks for example turning manoeuvres are a demanding task. Even with assistance by a signaller, rear area camera and wing mirrors accidents occur in many cases. Furthermore, these manoeuvres disturb the work flow. Therefore, it is desirable that the driver can execute such manoeuvres as autonomously as possible.

The present invention facilitates reversing with garbage collection trucks. The driver is provided with a larger visual range, dangerous situations are detected automatically and displayed on the monitor, and brakes are applied automatically if an obstacle is detected by the system.

An essential requirement for solving the problem of an improved monitoring system is a essentially complete covering of the field of view. The proposed sensor technology (stereovision) allows a sub-division of the field of view into active and passive zones. For active zones of the stereo system an evaluation of the environmental geometry is performed, for example distances between truck and objects or persons are calculated by a data processing unit, for example the ECU 112. According to a special embodiment, for passive zones only restricted object recognition is performed. In this embodiment, passive zones provide the driver an extended field of vision on the display.

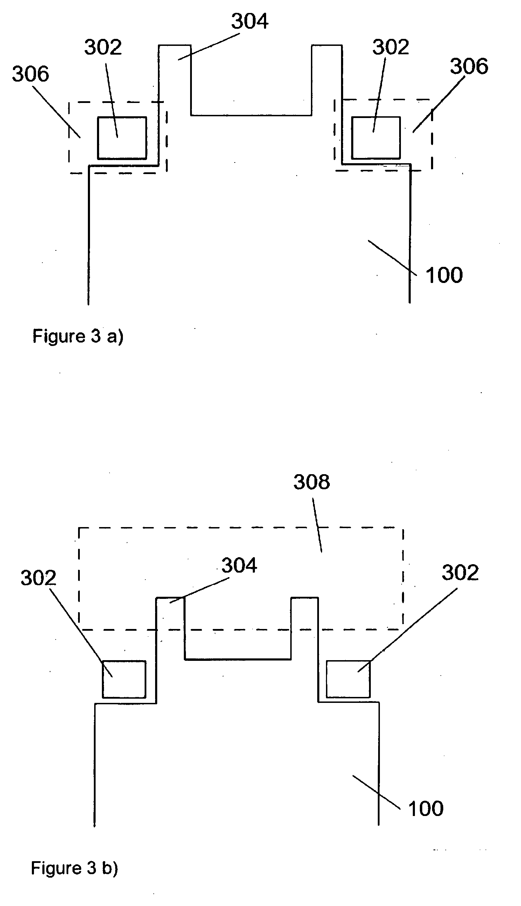

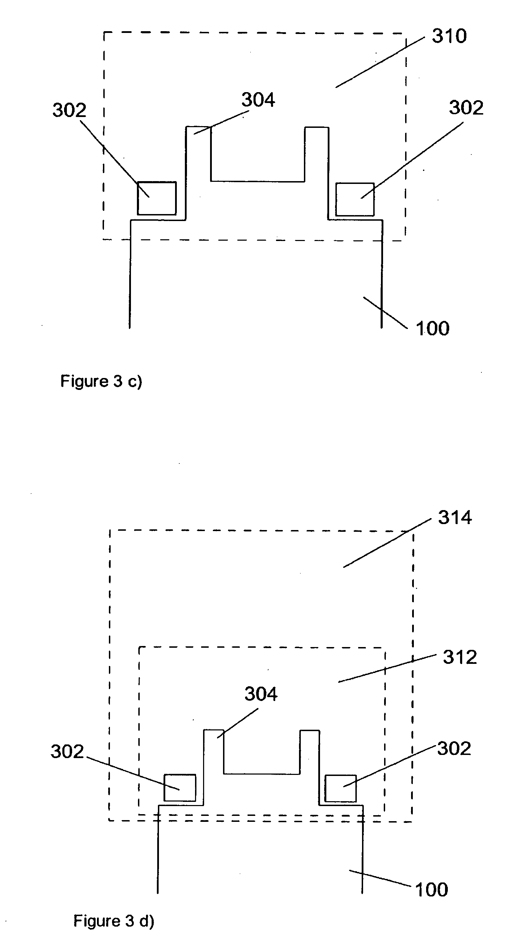

Figure 3 illustrates active and passive zones which comply with the corresponding requirements. Footboard supervision, lifter supervision and reversing lock require essentially the same active and passive zones 306, 308, 310, i.e. active and passive zones 306, 308, 310 coincide. In detail, for footboard supervision active and passive zones 306 capture the region around the footboards 302 (see figure 3a). For lifter supervision active and passive zones 308 capture the region of the working zone of the lifter 304 (see figure 3b). For reversing supervision active and passive zones 310 capture the region in direct proximity of the rear of the truck 100 (see figure 3c).

While manoeuvring in reverse it is sufficient to monitor actively the direct proximity 312 of the rear of the truck 100. Advantageously, a larger field of view 314 is passively displayed on the monitor 116 for facilitating for example the approach to a doorway (see figure 3d).

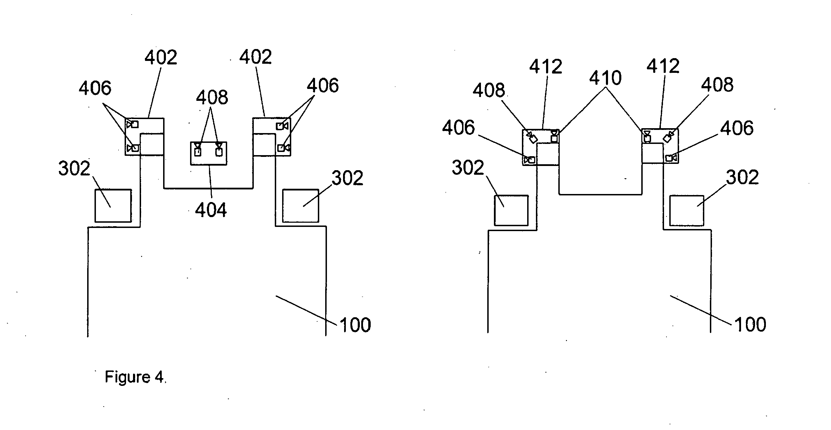

In figure 4 two examples of an arrangement of camera systems 402, 404, which comply with the requirements for the field of view in all four mentioned cases, are illustrated. According to a first embodiment, two stereo systems 402 are mounted on the upper parts of the lifter 304 and one stereo system 404 is mounted on the rear part of the roof. The three stereo systems 402, 404 are equipped each with two cameras 406, 408 for providing stereo images. According to a second embodiment, two stereo systems 412 are mounted on the upper parts of the lifter 304, where each stereo system 406 comprises three cameras 406, 408, 410.

### Enhancement Options:

### Detection of a Signaller with Emergency Stop

A laterally directed camera 404 (see figure 4) can detect whether a signaller is at the required position within the predefined zone. The signaller can be recognized for example by a special color of the working clothes. If the signaller is not in the required position within the predefined zone, the reversing prevention can be activated. The reversing prevention remains activated until the driver the situation has carefully examined and deactivates responsibly the reversing prevention.

### Centralized Visualization in the Cabin:

For solving the problem of a distributed attention during the monitoring of the work flow or of a driving manoeuvre, image-producing sensors, such as cameras, can be mounted on the wing mirrors. Theses image-producing sensors are directed towards the rear of the vehicle, therefore capturing the same or similar images as the driver see, when looking into the wing mirror. The images captured by these image-producing sensors are reproduced on a monitor in the driver's cabin. In a preferred embodiment of the invention, the images captured by the sensors mounted on the wing mirrors are reproduces on the monitor in combination with images, which are captured by image-producing sensors, such as for example cameras of a reversing assistant system, which are mounted on the rear of the vehicle.

### Assistant System for Turning Right

An extended field of vision, which is provided by image-producing sensors mounted on the right wing mirror, allow detection of approaching objects, such as a cyclist, when turning right with the vehicle. Active object detection as described above can detect static and dynamic objects. If such an object has been detected, an acoustic and/or a visible signal for the driver are output. If the predicted paths of the object and the vehicle will intersect, an automatic braking manoeuvre is initiated by an actuator unit.

The inventive method and system can, contrary to the solutions known from the prior art, transmit an image of the present situation to a monitor as well as support assessment of the situation. A classification system, which distinguishes between a cyclist and other objects, provides valuable information to the driver, which are not available, if only a distance between vehicle an object is detected.

The inventive system described in the first embodiment is a scalable system and can be adapted to a large number of further vehicle types and fields of application. Basically, number and orientation of the camera systems have to be adapted.

A second embodiment will be described in connection with a haul truck, since drivers of a haul truck have serious problems to notice objects, such as other vehicles, persons or even walls, due to the size of the haul truck. An inventive monitoring system provides an economic solution compared for example with laser-based solutions. In principle, the structure of the system for haul trucks is analogous to the system structure for garbage collection trucks. Since in the case of haul trucks the blind spot areas are much larger than for garbage collection trucks a corresponding system needs more (stereo) camera systems. By this means an improved environment monitoring, even active surround view, can be achieved also for large size trucks. Additionally to displaying the images captured by the cameras on the monitor within the cabin, the images may also be displayed on one or more monitors within a monitoring terminal.

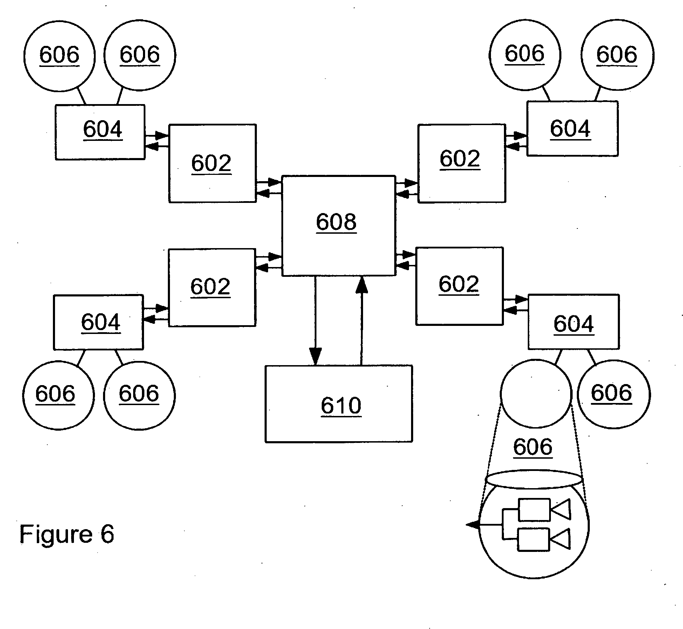

In order to activate the respective function (braking, stopping the lifter or such) the existing control and actuator systems of the vehicle are used. Dependent from the processing requirements a central data processing unit is used which can be combined with one or more hardware-related preprocessing steps near to the sensors. Figure 6 illustrates a two-stage preprocessing using ECUs 602 and FPGAs 604. According to this embodiment each stereo box 606 is communicatively coupled with one FPGA 604, where a first preprocessing is performed. One FPGA 604 can be used for one or more (in this embodiment two) stereo boxes 606. Each of the FPGAs 604 is communicatively coupled with one ECU 602, where a second step of the preprocessing is performed. The results of this two-stage preprocessing are transmitted from the ECUs 602 to a central ECU 608, which controls the actuators and communicates with the touch display 610.

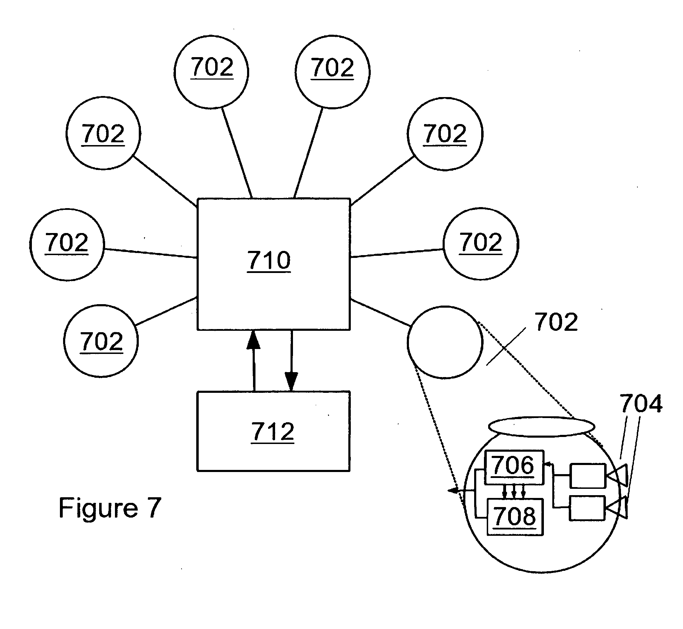

According to another embodiment, which is illustrated in figure 7, the complete preprocessing is performed decentralized in the stereo boxes 702. The signals of the cameras 704 are read in by an FPGA 706 which performs 3D-reconstruction. FPGA 706 is also coupled with an ARM processor 708 which performs ground detection. The results of 3D-reconstruction and ground detection are transmitted to a central ECU 710, which controls the actuators and communicates with the touch display 712.

While the invention has been described in terms of several preferred embodiments, it is contemplated that alterations, permutations and equivalents thereof will become apparent to those skilled in the art upon reading of the specification and study of the drawings. Furthermore, certain terminology has been used for the purpose of descriptive clarity, and not to limit the present invention.

## Claims

1. A method for operating a system, where the system can take different temporally changeable states, the method comprising the following steps:
- capturing parts of an environment of the system using at least one sensor,
- evaluating of the data captured by the at least one sensor,
- depending on a result of the evaluation, establishing automatically a predefined state of the system,
- reproducing of data which describes the captured parts of the environment,
- providing means for deactivating the established state by user input, where deactivating comprises a confirmation that the user has noticed the reproduction by deselecting of at least one person or object by user input, **characterized by**
- continuing monitoring, after deselection, by performing the steps of:
• capturing parts of the environment of the system using the at least one sensor,
• evaluating of the data captured by the at least one sensor, where the at least one deselected person or object is ignored,
• depending on a result of the evaluation, establishing automatically a predefined state of the system.
• ignoring the at least one deselected person or object for the purposes of evaluation.

2. The method according to claim 1, where the reproducing comprises at least one of a visual and an acoustic reproduction.

3. The method according to claim 1 or 2, where the reproducing comprises an emphasizing of at least one of an event, an object and a person causing the automatic establishing.

4. The method according to one of the preceding claims, where the method comprises automatic tracking of a deselected person or object.

5. The method according to one of the preceding claims, where at least one of the event, the object and the person is reproduced on a touch-sensible monitor.

6. The method according to claim 5, where the deactivating comprises at least one of touching on the touch-sensible monitor the reproduction of the emphasized event or person, pushing a button and inputting a voice command.

7. The method according to one of the preceding claims, where the evaluating comprises determining of three-dimensional coordinates of at least a part of the environment.

8. The method according to one of the preceding claims, where optical sensors are used, and data, which are captured from several optical sensors, are combined to one image.

9. The method according to one of the preceding claims, where data describing a deselected event, object or person is kept in storage means of the system and tracked by the system.

10. A system comprising at least
- one sensor,
- one data processing unit for evaluating of the data captured by the at least one sensor and for establishing automatically a predefined state of the system,
- one means for reproducing the captured data and
- one means for deactivating the established state,
where the system is configured such that a method according to one of the claims 1 to 9 is executable.

11. The system according to claim 10, where at least one of the sensors and the means for reproducing the captured data and for deactivating the established state is mounted on a vehicle, especially on a special vehicle such as a garbage collection truck.

12. The system according to claim 10 or 11, where the sensors comprise at least one optical sensor, and where preferably at least two optical sensors form at least one stereo camera system.

13. The system according to one of the claims 10 to 12, where the means for deactivating comprise at least one of a touch-sensitive monitor and a microphone.

14. A computer program that enables a data processing system, once it has been loaded to storage means of the data processing system, to execute in co-operation with at least one sensor, at least one means for reproducing of data captured by the at least one sensor and at least one means for deactivating a state a method according to one of the claims 1 to 9.

15. A computer-readable storage means on which a program is stored that enables a data processing system, once the program has been loaded into memory means of the data processing system, to execute in co-operation with at least one sensor, at least one means for reproducing of data captured by the at least one sensor and at least one means for deactivating a state a method according to one of the claims 1 to 9.

## Patentansprüche

1. Verfahren für den Betrieb eines Systems, wobei das System verschiedene zeitlich veränderbare Zustände einnehmen kann, wobei das Verfahren die folgenden Schritte umfasst:
- das Erfassen von Teilen einer Umgebung des Systems mit Hilfe zumindest eines Sensors,
- das Auswerten der durch den zumindest einen Sensor erfassten Daten,
- in Abhängigkeit von einem Ergebnis der Auswertung das automatische Herstellen eines vordefinierten Zustands des Systems,
- das Reproduzieren von Daten, welche die erfassten Teile der Umgebung beschreiben,
- das Bereitstellen von Mitteln zum Deaktivieren des hergestellten Zustands durch Benutzereingabe, wobei das Deaktivieren eine Bestätigung, dass der Benutzer die Reproduktion zur Kenntnis genommen hat, durch Abwählen zumindest einer Person oder eines Objekts durch Benutzereingabe umfasst,
**gekennzeichnet durch**
- das Fortsetzen des Überwachens nach der Abwahl **durch** Ausführen der folgenden Schritte:
• das Erfassen von Teilen der Umgebung des Systems mit Hilfe des zumindest einen Sensors,
• das Auswerten der **durch** den zumindest einen Sensor erfassten Daten, wobei die zumindest eine abgewählte Person bzw. das zumindest eine abgewählte Objekt ignoriert werden,
• in Abhängigkeit von einem Ergebnis der Auswertung das automatische Herstellen eines vordefinierten Zustands des Systems,
• das Ignorieren der zumindest einen abgewählten Person bzw. des zumindest einen abgewählten Objekt für die Auswertungszwecke.

2. Verfahren nach Anspruch 1, wobei das Reproduzieren zumindest eine visuelle und/oder eine akustische Reproduktion umfasst.

3. Verfahren nach Anspruch 1 oder 2, wobei das Reproduzieren ein Hervorheben zumindest eines Ereignisses, eines Objekts und/oder einer Person umfasst, welche das automatische Herstellen bewirken.

4. Verfahren nach einem der vorangehenden Ansprüche, wobei das Verfahren das automatische Verfolgen einer abgewählten Person bzw. eines abgewählten Objekts umfasst.

5. Verfahren nach einem der vorangehenden Ansprüche, wobei zumindest das Ereignis, das Objekt und/oder die Person auf einem berührungsempfindlichen Monitor reproduziert werden.

6. Verfahren nach Anspruch 5, wobei das Deaktivieren zumindest das Berühren der Reproduktion des hervorgehobenen Ereignisses bzw. der hervorgehobenen Person auf dem berührungsempfindlichen Bildschirm, das Drücken einer Taste und/oder das Eingeben eines Sprachbefehls umfasst.

7. Verfahren nach einem der vorangehenden Ansprüche, wobei das Auswerten das Bestimmen dreidimensionaler Koordinaten zumindest eines Teils der Umgebung umfasst.

8. Verfahren nach einem der vorangehenden Ansprüche, wobei optische Sensoren genutzt werden und von verschiedenen optischen Sensoren erfasste Daten zu einem Bild kombiniert werden.

9. Verfahren nach einem der vorangehenden Ansprüche, wobei Daten, die ein abgewähltes Ereignis, ein abgewähltes Objekt oder eine abgewählte Person beschreiben, in Speichermitteln des Systems gehalten und vom System verfolgt werden.

10. System, umfassend zumindest
- einen Sensor,
- eine Datenverarbeitungseinheit zum Auswerten der durch den zumindest einen Sensor erfassten Daten und zum automatischen Herstellen eines vordefinierten Zustands des Systems,
- ein Mittel zum Reproduzieren der erfassten Daten und
- ein Mittel zum Deaktivieren des hergestellten Zustands,
wobei das System so gestaltet ist, dass ein Verfahren nach einem der Ansprüche 1 bis 9 ausführbar ist.

11. System nach Anspruch 10, wobei zumindest einer der Sensoren und/oder der Mittel zum Reproduzieren der erfassten Daten und zum Deaktivieren des hergestellten Zustands an einem Fahrzeug, insbesondere an einem Sonderfahrzeug, wie einem Müllfahrzeug, angebracht ist.

12. System nach Anspruch 10 oder 11, wobei die Sensoren zumindest einen optischen Sensor umfassen und wobei vorzugsweise zumindest zwei optische Sensoren zumindest ein Stereokamerasystem ausbilden.

13. System nach einem der Ansprüche 10 bis 12, wobei die Mittel zum Deaktivieren zumindest einen berührungsempfindlichen Monitor und/oder ein Mikrofon umfassen.

14. Computerprogramm, das ein Datenverarbeitungssystem befähigt, nachdem es auf Speichermittel des Datenverarbeitungssystems geladen wurde, in Zusammenwirkung mit zumindest einem Sensor, zumindest einem Mittel zum Reproduzieren von durch den zumindest ein Sensor erfassten Daten und zumindest einem Mittel zum Deaktivieren eines Zustands ein Verfahren nach einem der Ansprüche 1 bis 9 auszuführen.

15. Computerlesbares Speichermittel, auf dem ein Programm gespeichert ist, das ein Datenverarbeitungssystem befähigt, nachdem das Programm in Speichermittel des Datenverarbeitungssystems geladen wurde, in Zusammenwirkung mit zumindest einem Sensor, zumindest einem Mittel zum Reproduzieren von durch den zumindest einen Sensor erfassten Daten und zumindest einem Mittel zum Deaktivieren eines Zustands ein Verfahren nach einem der Ansprüche 1 bis 9 auszuführen.

## Revendications

1. Procédé d'exploitation d'un système, où le système peut prendre différents états pouvant changer dans le temps, le procédé comprenant les étapes suivantes :
- la capture de parties d'un environnement du système à l'aide d'au moins un capteur,
- l'évaluation des données capturées par le capteur au moins au nombre de un,
- en fonction d'un résultat de l'évaluation, l'établissement automatique d'un état prédéfini du système,
- la reproduction de données qui décrivent les parties capturées de l'environnement,
- la fourniture de moyens pour désactiver l'état établi par entrée utilisateur, où la désactivation comprend une confirmation indiquant que l'utilisateur a noté la reproduction par la désélection d'au moins une personne ou d'au moins un objet par l'entrée utilisateur, **caractérisé par**
- la poursuite du contrôle, après désélection, par l'exécution des étapes suivantes :
• la capture de parties de l'environnement du système à l'aide du capteur au moins au nombre de un,
• l'évaluation des données capturées par le capteur au moins au nombre de un, où la personne ou l'objet au moins au nombre de un désélectionné(e) est ignoré(e),
• en fonction d'un résultat de l'évaluation, l'établissement automatique d'un état prédéfini du système,
• ignorer la personne ou l'objet au moins au nombre de un désélectionné(e) aux fins d'évaluation.

2. Procédé selon la revendication 1, où la reproduction comprend au moins une reproduction parmi une reproduction visuelle et une représentation acoustique.

3. Procédé selon la revendication 1 ou 2, où la reproduction comprend une mise en valeur d'au moins un élément parmi un événement, un objet et une personne causant l'établissement automatique.

4. Procédé selon l'une des revendications précédentes, où le procédé comprend le suivi automatique d'une personne ou d'un objet désélectionné(e).

5. Procédé selon l'une des revendications précédentes, où au moins un élément parmi l'événement, l'objet et la personne est reproduit sur un écran tactile.

6. Procédé selon la revendication 5, où la désactivation comprend au moins une action parmi le fait de toucher sur l'écran tactile la reproduction de l'événement ou de la personne mis(e) en valeur, de pousser un bouton et d'entrer une commande vocale.

7. Procédé selon l'une des revendications précédentes, où l'évaluation comprend la détermination de coordonnées tridimensionnelles d'au moins une partie de l'environnement.

8. Procédé selon l'une des revendications précédentes, où des capteurs optiques sont utilisés, et où des données qui sont capturées à partir de plusieurs capteurs optiques sont combinées en une image.

9. Procédé selon l'une des revendications précédentes, où des données décrivant un événement, un objet ou une personne désélectionné(e) sont conservées dans des moyens de mémorisation du système et suivies par le système.

10. Système, comprenant au moins
- un capteur,
- une unité de traitement de données pour évaluer les données capturées par le capteur au moins au nombre de un et pour établir automatiquement un état prédéfini du système,
- un moyen pour reproduire les données capturées et
- un moyen pour désactiver l'état établi,
où le système est configuré de telle sorte qu'un procédé selon l'une des revendications 1 à 9 est exécutable.

11. Système selon la revendication 10, où au moins un élément parmi les capteurs et le moyen pour reproduire les données capturées et pour désactiver l'état établi est monté sur un véhicule, notamment sur un véhicule spécial tel qu'un camion de ramassage des ordures.

12. Système selon la revendication 10 ou 11, où les capteurs comprennent au moins un capteur optique, et où de préférence au moins deux capteurs optiques forment au moins un système de caméra stéréo.

13. Système selon l'une des revendications 10 à 12, où le moyen pour la désactivation comprend au moins un élément parmi un écran tactile et un microphone.

14. Programme informatique qui permet à un système de traitement de données, une fois qu'il a été chargé dans des moyens de mémorisation du système de traitement de données, d'exécuter, en coopération avec au moins un capteur, avec au moins un moyen pour reproduire des données capturées par le capteur au moins au nombre de un et avec au moins un moyen pour désactiver un état, un procédé selon l'une des revendications 1 à 9.

15. Moyen de mémorisation, lisible par ordinateur, sur lequel un programme est enregistré qui permet à un système de traitement de données, une fois que le programme a été chargé dans des moyens de mémoire du système de traitement de données, d'exécuter, en coopération avec au moins un capteur, avec au moins un moyen pour reproduire des données capturées par le capteur au moins au nombre de un et avec au moins un moyen pour désactiver un état, un procédé selon l'une des revendications 1 à 9.
